# EUROPEAN PATENT SPECIFICATION

(11) **EP 1 324 569 B1**
(45) Date of publication and mention of the grant of the patent: **02.08.2006**
(21) Application number: 01310922.8
(22) Date of filing: 28.12.2001
(51) Int. Cl.: H04M 1/02, G06F 1/16, E05D 15/50

(54) **Foldable electronic apparatus**
Aufklappbares elektronisches Gerät
Appareil électronique pliable

(43) Date of publication of application: 02.07.2003
(73) Proprietor: Nokia Corporation, 02150 Espoo (FI)
(72) Inventor: Barnett, Ricky William, Minato-ku, Tokyo 105-001 (JP)
(74) Representative: Driver, Virginia Rozanne

(56) References cited:
- EP-A- 0 807 879
- DE-A- 4 428 051
- FR-A- 2 562 599
- US-A- 4 132 034
- US-A- 5 103 376
- US-A- 5 494 447

## Description

### FIELD OF INVENTION

The present invention relates to electronic devices, and, more particularly, to electronic devices that can physically be manipulated between different configurations.

The invention has been developed primarily for use in the fields of personal digital assistants and mobile telephone handsets, and will be described hereinafter with reference to these applications. However, it will be appreciated that the invention has application in a number of alternative electronic devices.

### BACKGROUND TO INVENTION

It is common for personal digital assistants and some mobile telephones to incorporate a hinging mechanism for allowing an open and closed configuration. In the closed configuration, some or all of any operating display is obscured (and protected), and some or all controls such as input keys and buttons may be covered to prevent accidental use of, or damage to, the device when not in use. Once the device is opened about the hinge, the user can access all of the controls and see an operating display.

Whilst convenient in some cases, such devices can only operate in a single open configuration with static options as far as operating controls are concerned.

Reference is made to US Patent No. 5,494,447 which relates to a hinge assembly for electronic devices that allows for lineal and rotational adjustment of each device part. European Patent Application Publication No. 0807879 relates to an information processing apparatus having a main body and a lid body configured so that the lid body may be configured between a closed state, a stacked state, a double screen state and an inverted state.

It would be desirable if more than one operating mode could be provided to enable a wider range of control options.

### SUMMARY OF INVENTION

According to the invention, there is provided a device foldable between a first open configuration, a closed configuration and a second open configuration, the apparatus including:a first body portion having a first edge, a first face and a second edge opposite the first edge; a second body portion having a third edge, a second face and a fourth edge opposite the third edge; a first connecting member, one end of which is hingedly connected to the first edge and an opposite end of which is hingedly connected to the third edge; and a second member, one end of which is hingedly connected to the second edge and an opposite end of which is hingedly connected to the fourth edge; the apparatus being configured such that: in the closed configuration the first edge is adjacent the fourth edge and the second edge is adjacent the third edge; in the first open configuration the second edge is adjacent the third edge and the first edge is not adjacent the fourth edge; and in the second open configuration the first edge is adjacent the fourth edge and the second edge is not adjacent the third edge; characterized in that the device is an electronic apparatus, and in that in the first open configuration a first set of operating controls is revealed, and in the second open configuration a second set of operating controls is revealed, and the appearance or operation of the first and second sets of operative controls is changed by either or both of the members obscuring or revealing operating controls in first and second respective open configurations. respective open configurations.

Preferably, at least some of the operating controls are on at least one of the members, such that they are accessible on that member only in one of the two open configurations.

Preferably, both sides of at least one of the members includes one or more of the operating controls, such that that member reveals the operating controls on one of its sides when in the first open configuration and on the other of its sides when in the second open configuration.

In a preferred embodiment, one or more of members has a through hole or other through contour that surrounds or lies adjacent one or more of the operating controls when in one of the open configurations, such that indicia on the member adjacent the hole or shape labels that operating control when in that open configuration.

In an alternative embodiment, the hole or contour surrounds one or more of the operating controls in the first open configurations, and one or more other operating controls in the second open configuration, such that indicia adjacent the hole or shape label the operating controls when adjacent the operating controls in each of the respective open configurations.

### BRIEF DESCRIPTION OF DRAWINGS

Figure 1 is a perspective view of an electronic apparatus according to the invention, with detail omitted for clarity;
Figure 2 is a perspective view of an alternative embodiment of an electronic apparatus according to the invention, in the closed position;
Figure 3 is a perspective view of the electronic apparatus of Figure 2, partially opened towards a first open configuration;
Figure 4 is a perspective view of the electronic apparatus of Figure 2 and 3, in the first open configuration; and
Figure 5 is a perspective view of the electronic apparatus of Figures 2 to 4, in a second open configuration.

### DETAILED DESCRIPTION OF PREFERRED AND OTHER EMBODIMENTS

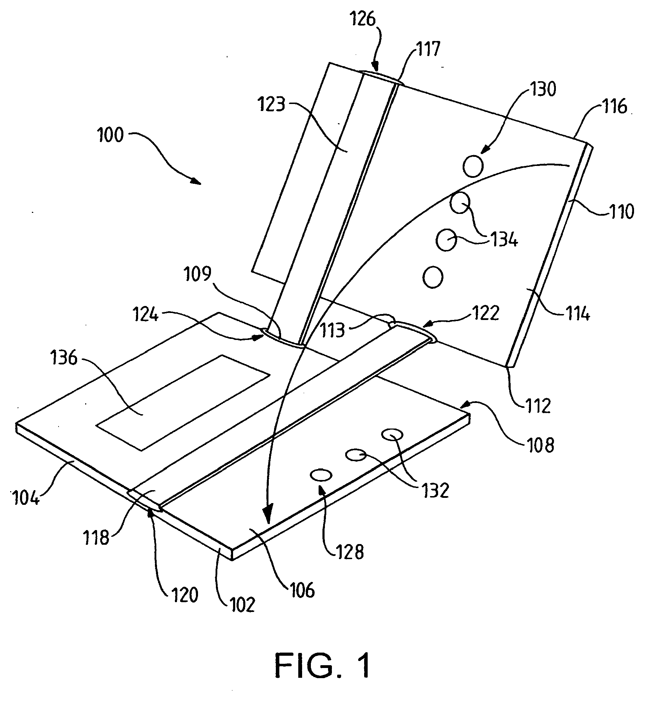

Referring to Figure 1, there is shown an electronic apparatus 100 foldable between a first open configuration, a closed configuration and a second open configuration. It will be appreciated that the apparatus has not been drawn to scale and has somewhat looser connections than would be the case in an engineered version, to enable a better understanding of the multi-way hinge connection.

The apparatus 100 includes a first body portion 102 having a first edge 104, a first face 106 and a second edge 108 substantially opposite the first edge. A second body portion 110 has a third edge 112, a second face 114 and a fourth edge 116 substantially opposite the third edge.

A first connecting member 118 has one end 120 hingedly connected to the first edge 104 by a first hinge 105 and an opposite end 122 hingedly connected to the third edge 112 by a third hinge 113. A second member 123 has one end 124 hingedly connected to the second edge 108 by a second hinge 109 and an opposite end 126 which is hingedly connected to the fourth edge 116 by a fourth hinge 117.

A first set of operating controls 128 are disposed on the first face 106 and a second set of operating controls 130 are disposed on the second face 114. In this embodiment, the first set 128 includes operating buttons 132 and the second set 130 includes buttons 134.

The first face 106 also includes an operating display 136.

In a closed position (not shown) the apparatus of figure 1 has the first edge adjacent the fourth edge and the second edge adjacent the third edge. The operating controls and the display are then enclosed and protected by the first body portion 102 and the second body portion 110.

When the device is opened into a first open configuration, as shown in Figure 1, the display is uncovered, as are the first and second sets of controls. The user can then implement any combination of data required. For example, if the invention is embodied in a personal digital assistant (PDA), data can be input via either or both sets of buttons. It will be appreciated that a greater number of operating control buttons will be desirable in such an embodiment, but for the purposes of simplicity, only a small number of such buttons are shown.

To fold the device into a second open configuration, the fourth and first edges are first swung back together around the axes of the second and third hinges. The second and third edges are then separated from each other and the apparatus rotated into the second open position about the axes of the first and fourth hinges. It will be appreciated that in a properly engineered product, the first and fourth hinge axes will be substantially coincident, as will those of the second and third hinge axes, to ensure that the device closes completely between the two open configurations. However, in this case the members are too long for this to occur, for the sake of understanding the mechanics of the invention.

In the second open configuration, the first member covers the second set of operating controls, such that a user cannot see or access them. Also, the operating display is obscured by the position of the second member.

The different side of the members, and the areas that they obscure in different open configurations, can be coloured differently, and can include indicia that is revealed or obscured depending upon which of the two open configurations are in use. This provides the ability for a visual appearance that is customisable depending upon the configuration.

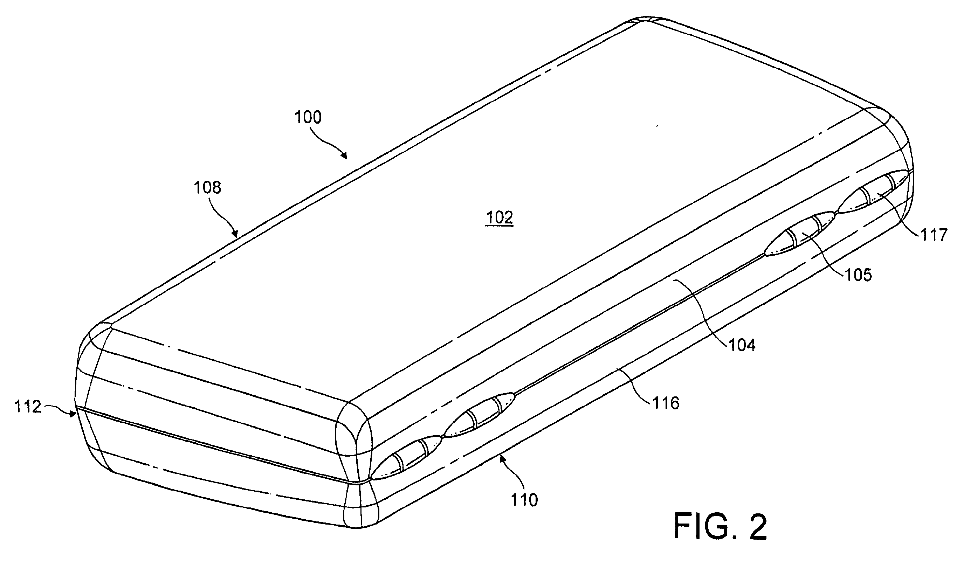

An alternative embodiment is shown in Figures 2 to 5, which shows a design that is correctly engineered such that the apparatus closed properly intermediate the first and second open configurations. The main distinction is that there are third 136 and fourth 138 members that operate similar to the respective first and second members. This enables a more stable apparatus that is more resistant to undesirable torsional forces in use, as well as providing more options for changing the appearance of the operating controls in the two open configurations.

In this embodiment, the members themselves include operating controls in the form of buttons 140. Whilst such buttons are shown on all sides of the members, it will be appreciated that this is optional, and that such buttons or other operating controls can appear on either or both sides of one or more of the members (or not at all, as in the Figure 1 embodiment).

The apparatus in this embodiment is a handset for two-way video telephony, and therefore includes a camera 142 and a display 143 for displaying video from another device to which the displayed apparatus is connected via, for example, a wireless network.

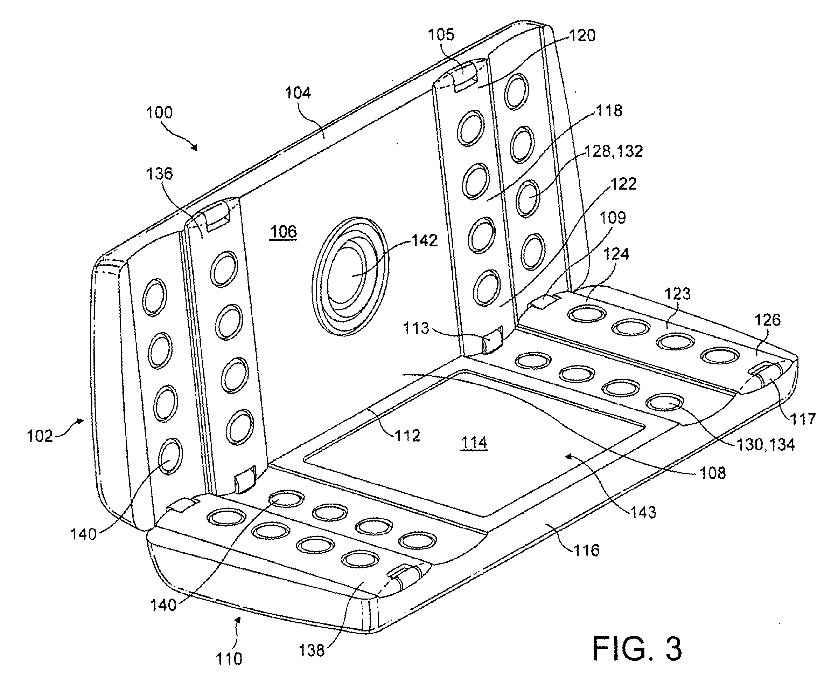

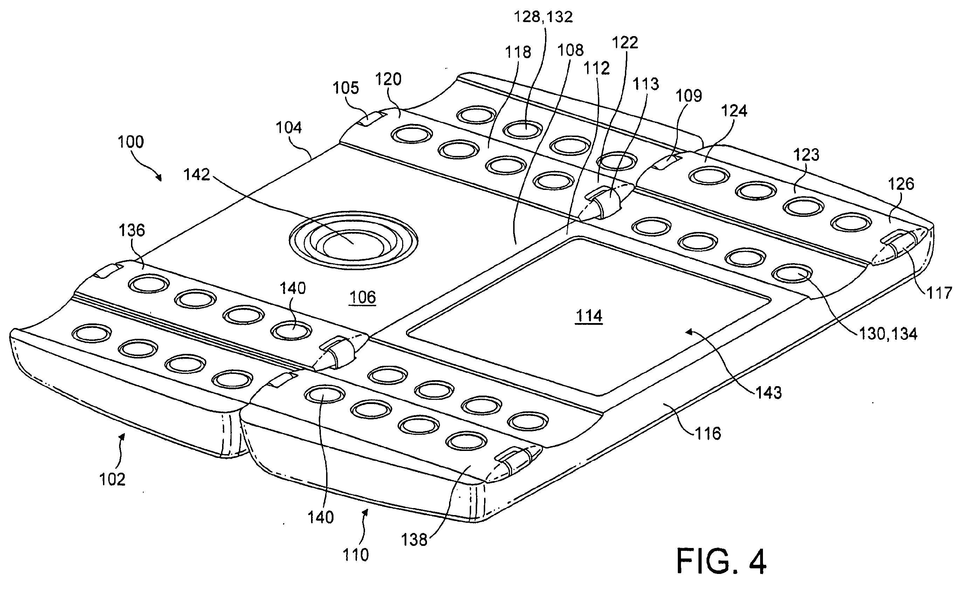

Figure 2 shows the apparatus in the closed configuration. Figure 3 shows the apparatus partially opening into the first open configuration. Figure 4 shows the device completely in the first open configuration.

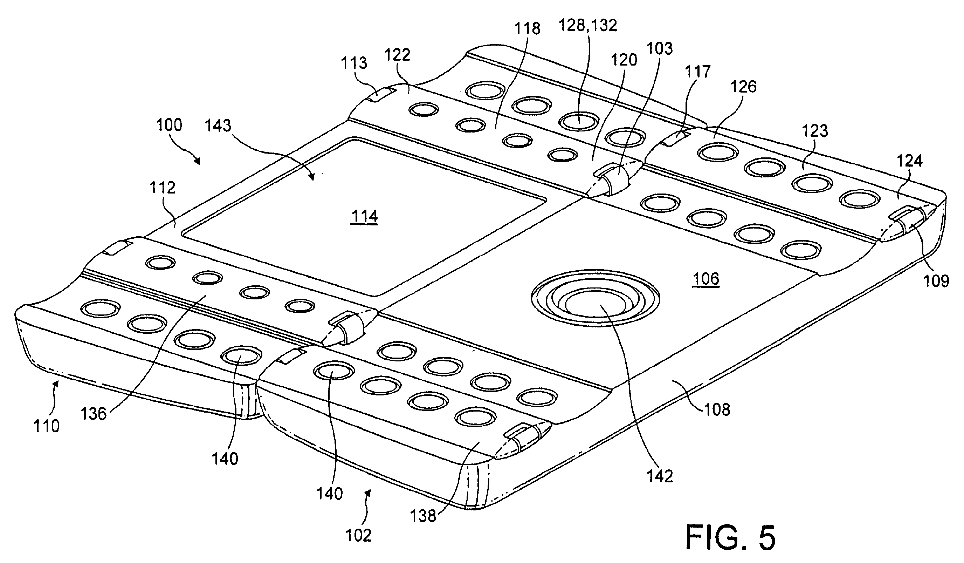

Figure 5 shows the apparatus completely in the second open configuration. It will be noted that alternative controls are now visible on each of the members, whilst the controls that were visible in Figures 3 and 4 are hidden. Similarly, the members have obscured some controls on the first and second faces that were visible in the first open configuration, and revealed some others that they obscured in the first configuration. In a preferred form, the controls are visually brighter in Figures 3 and 4, due to the colours chosen for the sides of the members that are shown in those Figures. Figure 5 reveals a more sombre colour scheme. The colourful version could be, for example, a game, whilst the more sombre version could implement the more conservative video telephony configuration.

It will be appreciated that the positions of the members in the two configurations can also reveal or obscure indicia, such as numbers, letters or diagrams, that can modify the way a user understands an operating control. For example, a member can have a first function label on one side (visible in the first open configuration) and a second function label on the other side. These labels are disposed adjacent an operating control to which they relate, when the apparatus is in the configuration that allows that function to be implemented by activating that operating control.

Various exemplary forms of the invention are envisaged. For example, in one orientation the apparatus can be configured to act as a mobile communication handset, whilst in another it can operate as a PDA. In other embodiments, one configuration can be a language translator and the other a calculator. It will be understood that although the preferred embodiment incorporates a telecommunications handset in at least one embodiment, any combination of devices or operating configurations can be implemented.

It will be appreciated by those skilled in the art that the described embodiments are exemplary only. Accordingly, the scope of the invention is not to be limited by the embodiments described in this specification.

## Claims

1. A device (100) foldable between a first open configuration, a closed configuration and a second open configuration, the apparatus including:
a first body portion (102) having a first edge (104), a first face (106) and a second edge (108) opposite the first edge;
a second body portion (110) having a third edge (112), a second face (114) and a fourth edge (116) opposite the third edge;
a first connecting member (118), one end of which is hingedly connected to the first edge and an opposite end of which is hingedly connected to the third edge; and
a second connecting member (123), one end of which is hingedly connected to the second edge and an opposite end of which is hingedly connected to the fourth edge;
the apparatus being configured such that:
in the closed configuration the first edge is adjacent the fourth edge and the second edge is adjacent the third edge;
in the first open configuration the second edge is adjacent the third edge and the first edge is not adjacent the fourth edge; and
in the second open configuration the first edge is adjacent the fourth edge and the second edge is not adjacent the third edge;
**characterized in that** the device is an electronic apparatus, and **in that** in the first open configuration a first set of operating controls (128) is revealed, and in the second open configuration a second set of operating controls (130) is revealed, and the appearance or operation of the first and second sets of operative controls is changed by either or both of the connecting members obscuring or revealing operating controls in first and second respective open configurations.

2. A device according to claim 1, wherein at least some of the operating controls are on at least one of the members, such that they are accessible on that member only in one of the two open configurations.

3. A device according to claim 2, wherein both sides of at least one of the members includes one or more of the operating controls, such that that member reveals the operating controls on one of its sides when in the first open configuration and on the other of its sides when in the second open configuration.

4. A device according to claim 1 or 2, wherein one or more of members has a through hole or other through contour that surrounds or lies adjacent one or more of the operating controls when in one of the open configurations, such that indicia on the member adjacent the hole or shape labels that operating control when in that open configuration.

5. A device according to claim 4, wherein the hole or contour surrounds one or more of the operating controls in the first open configurations, and one or more other operating controls in the second open configuration, such that indicia adjacent the hole or shape label the operating controls when adjacent the operating controls in each of the respective open configurations.

## Patentansprüche

1. Vorrichtung (100), die faltbar zwischen einer ersten offenen Konfiguration, einer geschlossenen Konfiguration und einer zweiten offenen Konfiguration ist, wobei das Gerät einschließt:
- einen ersten Körperabschnitt (102), der einen ersten Rand (104), eine erste Fläche (106) und einen zweiten Rand (108) gegenüber des ersten Rands aufweist;
- einen zweiten Körperabschnitt (110), der einen dritten Rand (112), eine zweite Fläche (114) und einen vierten Rand (116) gegenüber des dritten Rands aufweist;
- ein erstes Verbindungselement (118), wobei ein Ende davon gelenkig mit dem erste Rand verbunden ist und ein gegenüberliegendes Ende davon gelenkig mit dem dritten Rand verbunden ist; und
- ein zweites Verbindungselement (123), wobei ein Ende davon gelenkig mit dem zweiten Rand verbunden ist und ein gegenüberliegendes Ende davon gelenkig mit dem vierten Rand verbunden ist;
wobei das Gerät derart konfiguriert ist, dass:
- der erste Rand in der geschlossenen Konfiguration an den vierten Rand angrenzt und der zweite Rand an den dritten Rand angrenzt.
- der zweite Rand in der ersten offenen Konfiguration an den dritten Rand angrenzt und der erste Rand nicht an den vierten Rand angrenzt;
- der erste Rand in der zweiten offenen Konfiguration an den vierten Rand angrenzt und der zweite Rand nicht an den dritten Rand angrenzt;
**dadurch gekennzeichnet, dass** die Vorrichtung ein elektrisches Gerät ist und dass in der ersten offenen Konfiguration ein erster Satz von Bedienelementen (128) offen gelegt ist, und in der zweiten offenen Konfiguration ein zweiter Satz von Bedienelementen (130) offen gelegt ist, und das Aussehen oder die Bedienung des ersten und zweiten Satzes von Bedienelementen verändert wird, indem einer der beiden oder beide Verbindungselemente die Bedienelemente in der ersten bzw. zweiten offenen Konfiguration verdecken oder offenlegen.

2. Vorrichtung nach Anspruch 1, wobei sich mindestens einige der Bedienelemente auf mindestens einem der Elemente befinden, so dass sie auf dem Element nur in einer der beiden offenen Konfigurationen zugänglich sind.

3. Vorrichtung nach Anspruch 2, wobei beide Seiten des mindestens einen der Elemente einen oder mehrere der Bedienelemente einschließen, so dass dieses Element die Bedienelemente auf einer seiner Seiten offenlegt, wenn es sich in der ersten offenen Konfiguration befindet und auf der anderen seiner Seite offenlegt, wenn es sich in der zweiten offenen Konfiguration befindet.

4. Vorrichtung nach Anspruch 1 oder 2, wobei ein oder mehrere der Elemente ein Durchgangsloch oder eine andere durchgehende Kontur aufweisen, die in einer der offenen Konfigurationen ein oder mehrere der Bedienelemente umgibt oder an ein oder mehrere der Bedienelemente angrenzend liegt, so dass in dieser geöffneten Konfiguration Zeichen auf dem Element, die an das Loch angrenzen oder die Form, das Bedienelement kennzeichnen.

5. Vorrichtung nach Anspruch 4, wobei das Loch oder die Kontur in der ersten offenen Konfiguration ein oder mehrere der Bedienelemente und in der zweiten offenen Konfiguration ein oder mehrere andere der Bedienelemente umgeben, so dass Zeichen, die an das Loch angrenzen oder Form, die Bedienelemente kennzeichnen, wenn sie in jeder der jeweiligen geöffneten Konfigurationen an die Bedienelemente angrenzen.

## Revendications

1. Dispositif (100) repliable entre une première configuration ouverte, une configuration fermée et une deuxième configuration ouverte, le dispositif comprenant :
une première partie de corps (102) présentant un premier bord (104), une première face (106) et un deuxième bord (108) qui est opposé au premier bord ;
une deuxième partie de corps (110) présentant un troisième bord (112), une deuxième face (114) et un quatrième bord (116) qui est opposé au troisième bord ;
un premier élément de raccordement (118), dont une extrémité est raccordée de façon articulée au premier bord, et dont une extrémité opposée est raccordée de façon articulée au troisième bord ; et
un deuxième élément de raccordement (123), dont une extrémité est raccordée de façon articulée au deuxième bord, et dont une extrémité opposée est raccordée de façon articulée au quatrième bord ;
le dispositif étant configuré de telle sorte que :
dans la configuration fermée, le premier bord est adjacent au quatrième bord et le deuxième bord est adjacent au troisième bord ;
dans la première configuration ouverte, le deuxième bord est adjacent au troisième bord et le premier bord n'est pas adjacent au quatrième bord ; et
dans la deuxième configuration ouverte, le premier bord est adjacent au quatrième bord et le deuxième bord n'est pas adjacent au troisième bord ;
**caractérisé en ce que** le dispositif est un appareil électronique, et **en ce que**, dans la première configuration ouverte, un premier ensemble de commandes de fonctionnement (128) est révélé, et dans la deuxième configuration ouverte, un deuxième ensemble de commandes de fonctionnement (130) est révélé, et **en ce que** l'apparence ou le fonctionnement des premier et deuxième ensembles de commandes de fonctionnement est modifié(e) du fait que l'un ou l'autre des éléments de raccordement - ou bien les deux à la fois - masque(nt) ou révèle(nt) des commandes de fonctionnement dans les première et deuxième configurations ouvertes respectives.

2. Dispositif selon la revendication 1, dans lequel au moins certaines des commandes de fonctionnement se trouvent sur au moins un des éléments, de sorte qu'elles sont accessibles sur cet élément uniquement dans l'une des deux configurations ouvertes.

3. Dispositif selon la revendication 2, dans lequel les deux côtés d'au moins un des éléments comportent une ou plusieurs des commandes de fonctionnement, de sorte que cet élément révèle les commandes de fonctionnement sur l'un de ses côtés quand il se trouve dans la première configuration ouverte, et sur l'autre de ses côtés quand il se trouve dans la deuxième configuration ouverte.

4. Dispositif selon la revendication 1 ou 2, dans lequel un ou plusieurs des éléments comporte(nt) un trou de passage - ou un autre contour traversant - qui entoure ou est adjacent à une ou plusieurs des commandes de fonctionnement quand il se trouve dans l'une des configurations ouvertes, de sorte que des repères sur l'élément adjacent au trou - ou au contour - désignent cette commande de fonctionnement quand il se trouve dans cette configuration ouverte.

5. Dispositif selon la revendication 4, dans lequel le trou ou le contour entoure une ou plusieurs des commandes de fonctionnement dans la première configuration ouverte, et une ou plusieurs autres commandes de fonctionnement dans la deuxième configuration ouverte, de sorte que des repères adjacents au trou ou au contour désignent les commandes de fonctionnement quand ils sont adjacents aux commandes de fonctionnement dans chacune des configurations ouvertes respectives.
